# EUROPEAN PATENT APPLICATION

(11) **EP 4 030 603 A1**
(43) Date of publication of application: **20.07.2022**
(21) Application number: 21151539.0
(22) Date of filing: 14.01.2021
(51) Int. Cl.: H02M 1/10, H02M 1/42, H05B 45/3725, H01R 31/06

(54) **POWER ADAPTER OF LIGHT STRING ASSEMBLY HAVING POWER FACTOR CORRECTION CIRCUIT**

(71) Applicant: Guang Zhou Ting Shen Electric Co., Ltd., Guangdong 511440 (CN)
(72) Inventor: WANG, Chia-Chun, Zhudong Township, Hsinchu County (TW)
(74) Representative: Viering, Jentschura & Partner mbB Patent- und Rechtsanwälte

(57) **Abstract**

An adapter of a light string assembly contains: a casing (1), a plug (2) arranged on the casing (1), an energy saving circuit (3) accommodated in the casing (1). The energy saving circuit (3) has a filtration device (10), a rectifier (20), a power factor correction (PFC) (30), a transformer (40), and a feedback circuit (50) which are arranged from a voltage input end to a voltage output end of the energy saving circuit (3) in order. The PFS is defined between the rectifier (20) and the filtration device (10) so as to obtain quasi-sine currents from a power, characterized in that the energy saving circuit (3) has PFC with a line voltage, and a value of a power factor is close to 1, such that the PFS adjusts and corrects a power factor by way of the transformer (40), thus reducing an input loss and saving energy.

## Description

### FIELD OF THE INVENTION

The present invention relates power an adapter of a light string assembly is compact and has a small size so as to enhance environment protection and to reduce the input loss.

### BACKGROUND OF THE INVENTION

A conventional adapter of a light string assembly does not contain an input voltage and power factor correction (PFC) to cause high working consumption and poor environment protection. Furthermore, a power factor value of a conventional filter circuit of an input capacitor is low, for example, the power factor value is between 05-0.7, and a harmonic content is high.

The present invention has arisen to mitigate and/or obviate the afore-described disadvantages.

### SUMMARY OF THE INVENTION

The primary objective of the present invention is to provide an adapter of a light string assembly which is compact and has a small size so as to enhance environment protection and to reduce the input loss.

To obtain the above mentioned objective, an adapter of a light string assembly provided by the present invention contains: a casing, a plug arranged on the casing, an energy saving circuit accommodated in the casing.

The energy saving circuit has a filtration device, a rectifier, a power factor correction (PFC), a transformer, and a feedback circuit which are arranged from a voltage input end to a voltage output end of the energy saving circuit in order.

The PFS is defined between the rectifier and the filtration device so as to obtain quasi-sine currents from a power, characterized in that the energy saving circuit has PFC with a line voltage, and a value of a power factor is close to 1, such that the PFS adjusts and corrects a power factor by way of the transformer, thus reducing an input loss and saving energy.

### BRIEF DESCRIPTION OF THE DRAWINGS

FIG. 1 is a perspective view showing the assembly of an adapter of a light string assembly according to a first embodiment of the present invention.
FIG. 2 is another perspective view showing the assembly of the adapter of the light string assembly according to the first embodiment of the present invention.
FIG. 3 is also another perspective view showing the assembly of the adapter of the light string assembly according to the first embodiment of the present invention.
FIG. 4 is still another perspective view showing the assembly of the adapter of the light string assembly according to the first embodiment of the present invention.
FIG. 5 is a side plan view showing the assembly of an adapter of a light string assembly according to a second embodiment of the present invention.
FIG. 6 is another side plan view showing the assembly of the adapter of the light string assembly according to the second embodiment of the present invention.
FIG. 7 is also another side plan view showing the assembly of the adapter of the light string assembly according to the second embodiment of the present invention.
FIG. 8 is still another side plan view showing the assembly of the adapter of the light string assembly according to the second embodiment of the present invention.
FIG. 9 is another side plan view showing the assembly of the adapter of the light string assembly according to the second embodiment of the present invention.
FIG. 10 is also another side plan view showing the assembly of the adapter of the light string assembly according to the second embodiment of the present invention.
FIG. 11 is a block diagram of an energy saving circuit according to the present invention.
FIG. 12 is a circuit diagram of the energy saving circuit according to the present invention.

### DETAILED DESCRIPTION OF THE PREFERRED EMBODIMENTS

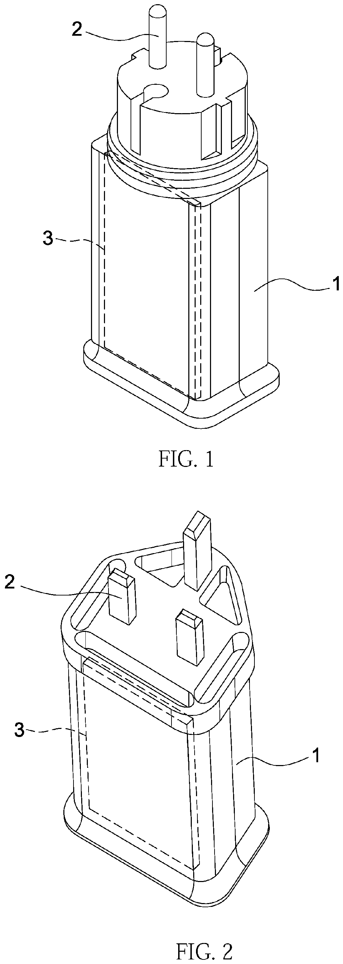

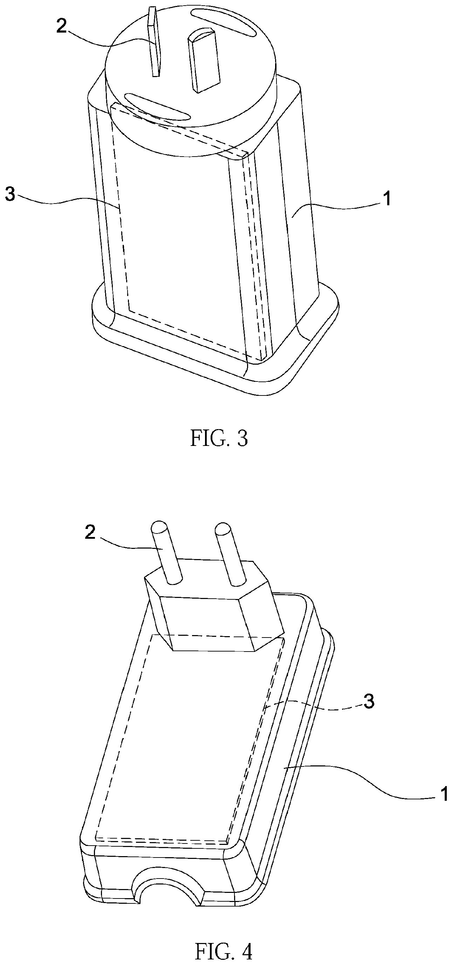

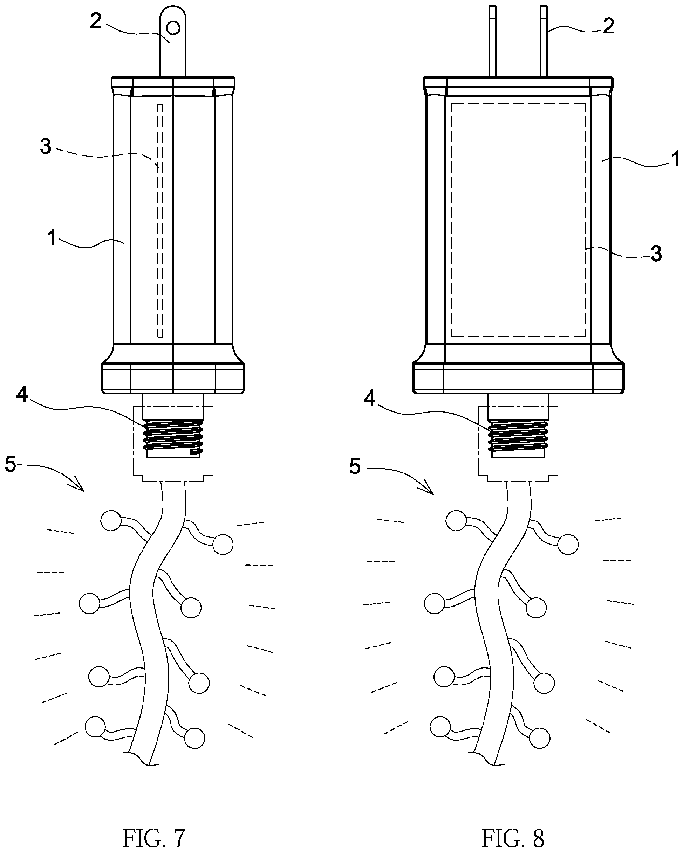

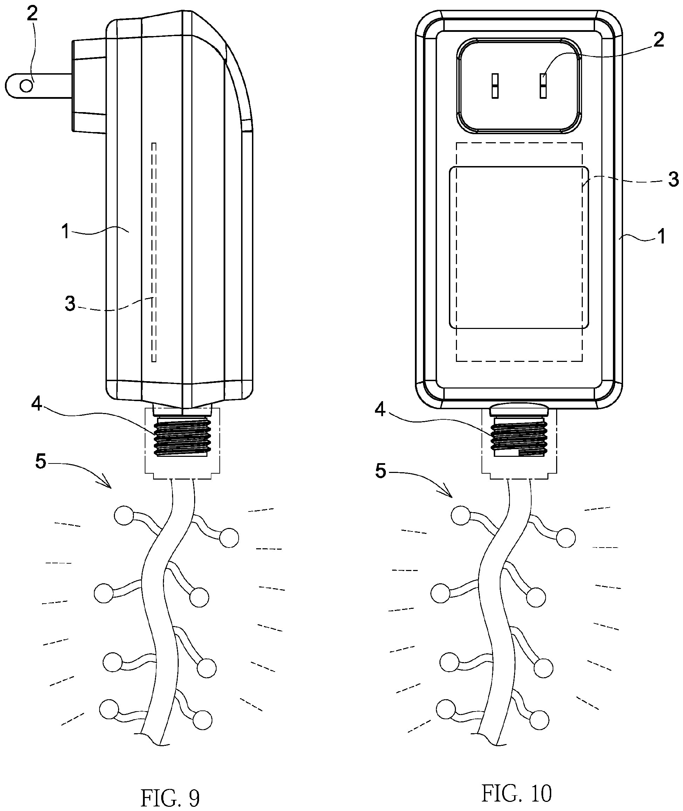

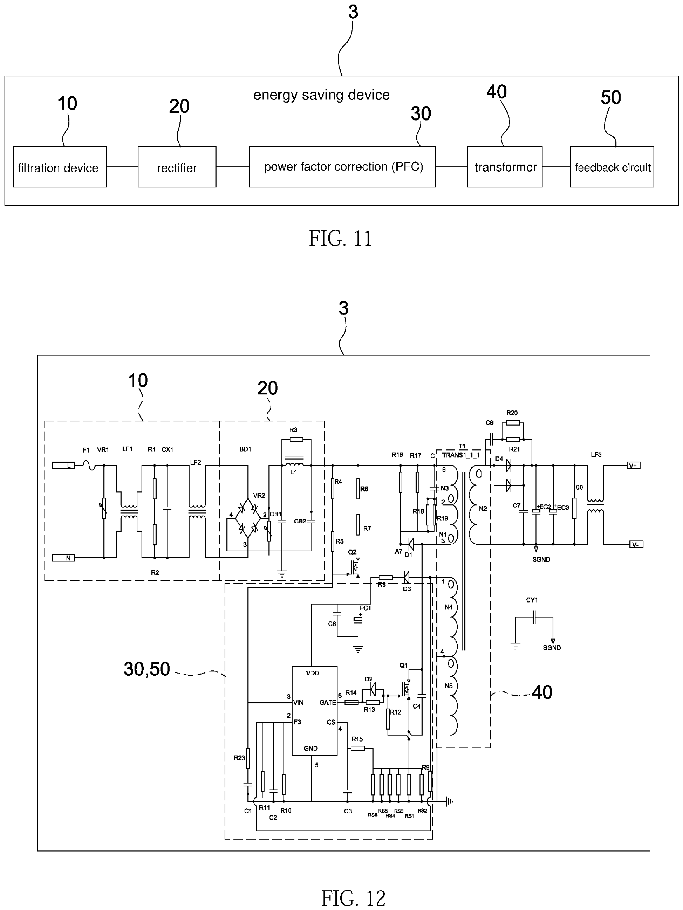

With reference to FIGS. 1-12, an adapter of a light string assembly having a power factor correction (PFC) circuit according to a first embodiment of the present invention comprises: a casing 1 and a plug 2. As shown in FIGS. 1-3, the plug 2 is arranged on an end of the casing 1 and is a European standard plug. As illustrated in FIG. 4, the plug 2 is arranged on a side wall of the casing 1. The casing 1 includes an energy saving circuit 3 accommodated therein.

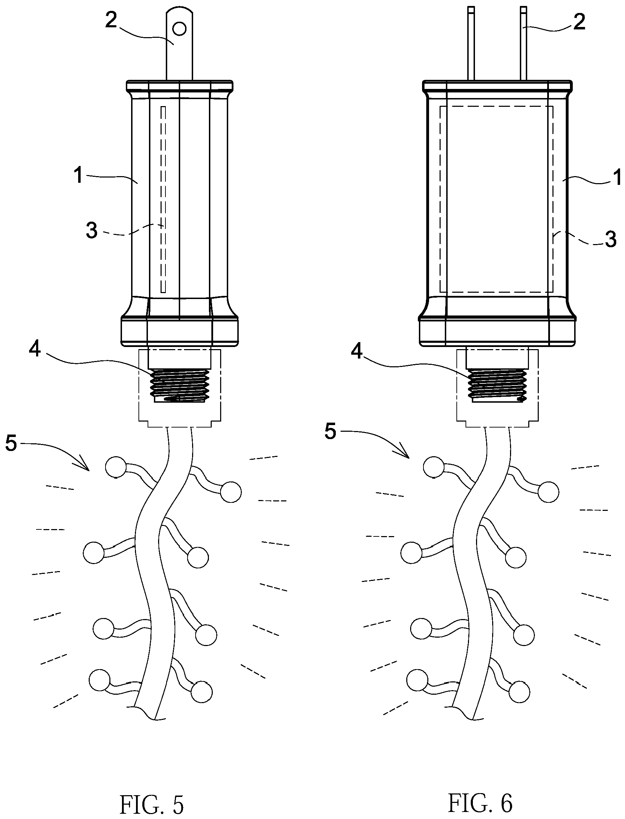

Referring to FIGS. 5-10, an adapter of a light string assembly having a power factor correction (PFC) circuit according to a second embodiment of the present invention, the plug 2 is an American standard plug, and the light string comprises a casing 1, a connection segment 4 configured to electrically coupled with a light string 5, characterized in that the casing 1 includes an energy saving circuit 3 accommodated therein, characterized in that the energy saving circuit 3 has a filtration device 10, a rectifier 20, a power factor correction (PFC) 30, a transformer 40, and a feedback circuit 50 which are arranged from a voltage input end to a voltage output end of the PFC 30 in order.

Preferably, the PFC 30 is defined between the rectifier 20 and the filtration device 10 so as to obtain quasi-sine currents from a power, characterized in that the PFC 30 has PFC with a line voltage, and a value of a power factor is close to 1 (or is more than 0.99), such that the PFC 30 adjusts and corrects a power factor by way of the transformer 40, thus reducing an input loss and saving energy.

The filtration device 10 is an EMI filter to filter noises, because high inductor current ripple and RMS current cause the noises on the input line.

The rectifier 20 includes four diodes or bridge rectifier circuits so as to rectify AC voltage to pulsating DC voltage, and the pulsating DC voltage is adjusted by a switch to high-efficiency pulsating DC voltage.

The PFC 30 adjusts the power factor by using a primary inductance of the flyback transformer 40 as the PFC inductance.

Preferably, the transformer 40 includes coils and a magnet core, such that electric currents are changed by the coils, and the coils are changed by electromagnetic induction to produce a self-inductance voltage, thus stopping an increasing or a decreasing of the electric currents.

The feedback circuit 50 is connected on a reverse input end of a current detection comparator so that the energy saving circuit 3 detects the electric currents via multiple feet, and the electric currents are converted into a voltage value by an external detection resistor, characterized in that when the voltage value reaches an output maximum valve of a multiplier, a pulse-width modulation output latch is reset, and a metal oxide semiconductor transistor (MOST) is turned off until the pulse-width modulation output latch is triggered by a signal, characterized in that the pulse-width modulation output latch is not triggered by way of a protective line until the signal of the feet disappears.

Accordingly, the adapter of the light string assembly of the present invention has advantage as follows:
1) The input loss of the light string assembly is reduced.
2) The energy of the light string assembly is saved.
3) The light string assembly of the power adapter is compact and has a small size so as to enhance environment protection and to reduce the input loss.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. An adapter of a light string assembly comprising:
a casing (1), a plug (2) arranged on the casing (1), an energy saving circuit (3) accommodated in the casing (1); **characterized in that**
the energy saving circuit (3) has a filtration device (10), a rectifier (20), a power factor correction (PFC) (30), a transformer (40), and a feedback circuit (50) which are arranged from a voltage input end to a voltage output end of the energy saving circuit (3) in order.
the PFS is defined between the rectifier and the filtration device (10) so as to obtain quasi-sine currents from a power, **characterized in that** the energy saving circuit (3) has PFC with a line voltage, and a value of a power factor is close to 1, such that the PFS adjusts and corrects a power factor by way of the transformer (40), thus reducing an input loss and saving energy.

2. The adapter as claimed in claim 1, **characterized in that** the rectifier includes four diodes or bridge rectifier circuits so as to rectify AC voltage to pulsating DC voltage.

3. The adapter as claimed in claim 1, **characterized in that** the transformer (40) includes coils and a magnet core, such that electric currents are changed by the coils, and the coils are changed by electromagnetic induction to produce a self-inductance voltage, thus stopping an increasing or a decreasing of the electric currents.
